# EUROPEAN PATENT APPLICATION

(11) **EP 3 459 711 A1**
(43) Date of publication of application: **27.03.2019**
(21) Application number: 18184755.9
(22) Date of filing: 20.07.2018
(51) Int. Cl.: B29C 64/129, B29C 64/264, B33Y 10/00, B33Y 30/00, B29C 64/393, B33Y 50/02

(54) **SYSTEM AND METHOD FOR DIGITAL LIGHT PROCESSING THREE-DIMENSIONAL PRINTING**

(30) Priority: 21.07.2017 US 201715656153
(71) Applicant: Ackuretta Technologies Pvt. Ltd., 11493 Taipei City (TW)
(72) Inventor: Wu, Li-Han, 11493 Taipei City (TW); Bagla, Ayush Vardhan, 11493 Taipei City (TW)
(74) Representative: Zaboliene, Reda

(57) **Abstract**

A digital light processing (DLP) three-dimensional (3D) printing system (100, 200, 300) includes a container (3) containing a solidifiable material; a platform (34, 44, 4) contacting a portion of the solidifiable material; a projector (1) projecting an electromagnetic radiation (2) on the solidifiable material to form a solidified layer; and an optical component (10) disposed on an optical path between the projector (1) and the platform (4, 34, 44); wherein the optical component (10) is rotated to shift the electromagnetic radiation (2) during the formation the solidified layer, thereby forming a smooth edge and an extended area (14) of the solidified layer.

## Description

### CROSS-REFERENCE TO RELATED APPLICATION

This application claims priority to U.S. non-provisional application No. 15/656153, filed on July 21^{st}, 2017, which is incorporated herein by reference in its entirety.

### BACKGROUND

### 1. Field

The present disclosure is directed to 3D printing. More particularly, the present disclosure is directed to a digital light processing (DLP) three-dimensional (3D) printing system and method.

### 2. Background

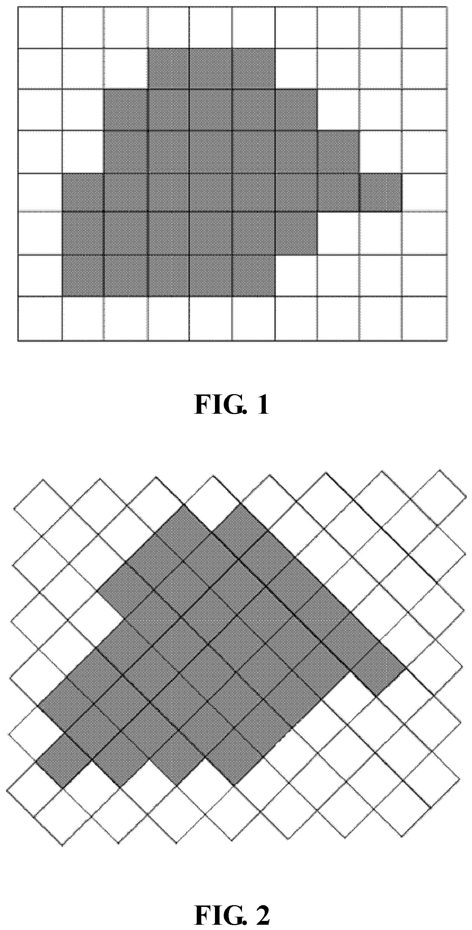

Three-dimensional (3D) printing is an effective technology for accurately forming 3D objects for the purpose of prototyping and manufacturing. One commercially available 3D printing methodology is stereolithography. Stereolithography creates 3D objects by successive formation of layers from a fluid-like medium next to previously formed layers of medium and by selective solidification of those layers according to cross-sectional data representing successive slices of the desired three-dimensional object. A solidifying fluid medium in a conventional stereolithography-based system may include a digital light processing (DLP) projector. The DLP projector typically includes a digital micro mirror device (DMD). The DMD has a finite number of pixels, therefore electromagnetic radiation generated by the DMD is pixelated. The pixelated electromagnetic radiation is applied on a solidifiable material. The pixelated electromagnetic radiation forms pixels on the edge of each of the solidified layer. Referring to FIG. 1 and FIG. 2, a plurality of blocks represents pixels in the DMD, and gray blocks are pixelated electromagnetic radiation that can be applied on a solidifiable material.

The product of DLP is formed by multiple solidified layers, therefore the pixels on each layers are accumulated and transforms to a volume-pixel. The volume-pixel, or voxel, is a 3D structure formed by layers of pixels on the solidified layer. The voxels on the edge of the layers may result in rough or uneven surfaces on the DLP product of DLP.

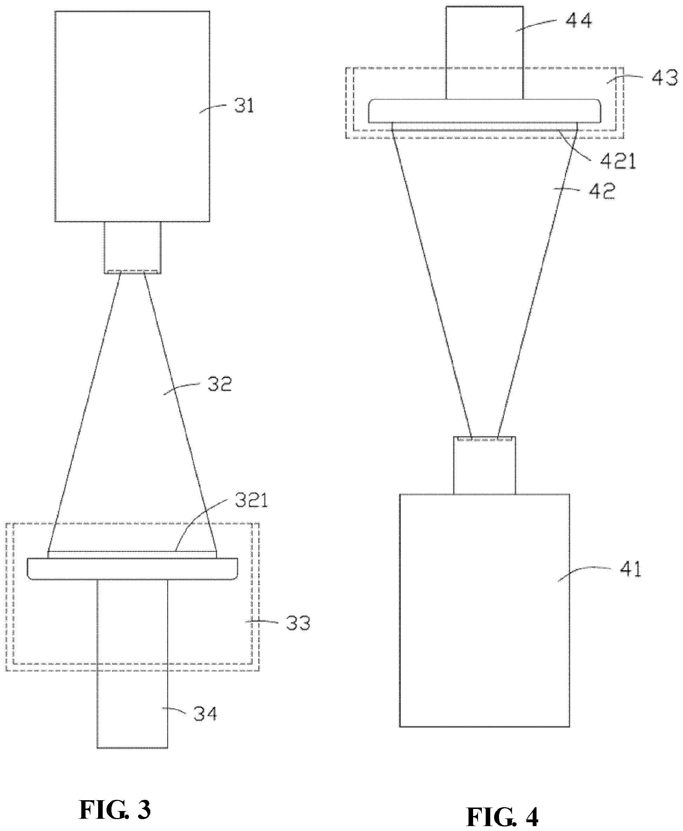

Referring to FIG. 3, a conventional DLP system for 3D printing includes a platform 34, a vat 33 and a DLP projector 31. The DLP projector 31 is located above the platform 34 and the vat 33. The DLP projector projects ultra violet rays (UV) to a photopolymer resin contained in the vat 33. The photopolymer resin is solidified when exposed to UV. At least one part of the platform 34 is positioned inside the vat 33 and in contact with the photopolymer resin. The platform 34 moves vertically after a UV projection 321 is projected to the photopolymer resin on the platform 34 so the photopolymer on the platform 34 can be re-positioned. Thereafter, the DLP projector 31 applies UV to a new layer of non-solidified photopolymer resin. Multiple solidified layers of photopolymer resin form a 3D printing product. The 3D printing product can be removed from the platform 34 after the 3D printing process is completed.

Alternatively, the conventional DLP projector may be located under the platform, as illustrated in FIG. 4. A DLP projector 41 projects a UV projection 421 to the photopolymer resin contained in a vat 43 and under a platform 44, and the photopolymer resin under the platform 44 is solidified. The platform 44 moves upward after a solidified layer of the photopolymer resin is formed to expose a new layer of non-solidified photopolymer resin.

Nevertheless, the DMD of the conventional DLP projector has limited pixels, leading to pixelated edges of the solidified layer. The DLP product is composed of many solidified layers, therefore the pixels of each layer would be accumulated to form voxels. Low-resolution voxels are the cause of roughness on the surface of the DLP product.

To improve the roughness issues in conventional DLP products, the surface of the DLP product is typically manually polished to smooth out the rough edges. However, the manual polishing process can be costly and time-consuming.

Shkolnik disclosed in U.S. Patent No. 7,790,093 a method for improving the resolution of DLP products, wherein a mirror is intermittently rotated along the Y-axis or the X-axis to shift the position of the projection of the electromagnetic radiation on the photopolymer resin, thereby intermittently producing different electromagnetic radiation projections to increase the resolution. However, in Shkolnik, to ensure accuracy of UV projection, the position of the mirror needs to be re-adjusted every time the projection is being produced. Such readjustment significantly slows down the production of DLP products. Also, in order to generate different electromagnetic radiation projections, additional image processing algorithms or software may be needed to obtain different images for the projector, which also significantly increases the cost of DLP 3D printing systems. Finally, the surface of Shkolnik's DLP product needs to be polished to remove the rough edges formed from voxels. Therefore, there remains a need for improvements in shaping the DLP products.

### BREIF SUMMARY OF THE DISCLOSURE

An embodiment of the present disclosure provides a DLP 3D printing system and method with improved quality of stereolithographic products. In the DLP 3D printing system, the platform and/or the projector are movable along a predetermined path to continuously shift the projection of the electromagnetic radiation during formation of the solidified layer, thereby forming a smooth edge of the solidified layer.

Another embodiment of the present disclosure provides a 3D printing method using the DLP 3D printing system. In the method, the platform or the projector is moved along a predetermined path during formation of the solidified layer, thereby forming a smooth edge of the solidified layer.

Yet another embodiment of the present disclosure provides a DLP 3D printing system with at least one optical component. The optical component is a mirror, a lens, or a combination thereof. The optical component is disposed on an optical path between the projector and the platform, and is rotated to continuously shift a projection of the electromagnetic radiation during formation of the solidified layer, thereby forming a smooth edge of the solidified layer.

Still another embodiment of the present disclosure provides a 3D printing method using the DLP 3D printing system. In the method, the optical component is rotated to continuously shift the projection of the electromagnetic radiation during formation of the solidified layer, thereby forming a smooth edge of the solidified layer.

### BRIEF DESCRIPTION OF THE DRAWINGS

The present disclosure is illustrated by way of exemplary embodiments and accompanying drawings.
FIG. 1 illustrates an arrangement of pixels of DMD in a conventional DLP projector.
FIG. 2 illustrates another arrangement of pixels of DMD in a conventional DLP projector.
FIG. 3 illustrates a conventional DLP system, wherein the DLP projector is located above the platform.
FIG. 4 illustrates a conventional DLP system, wherein the DLP projector is located under the platform.
FIG. 5A illustrates a DLP system with the projector being disposed under the vat according to an exemplary embodiment of the present disclosure.
FIG. 5B illustrates a DLP system with the projector being disposed above the vat according to an exemplary embodiment of the present disclosure.
FIG. 6 illustrates an electromagnetic radiation projection of smooth edges and an extended area according to an exemplary embodiment of the present disclosure.
FIG. 7 illustrates a shifting route of a DLP projector according to an exemplary embodiment of the present disclosure.
FIG. 8 illustrates circular shifting routes and the diameter of the circular shifting routes of a DLP projector according to an exemplary embodiment of the present disclosure.
FIG. 9A illustrates an original electromagnetic radiation projection of 5 pixels according to an exemplary embodiment of the present disclosure.
FIG. 9B illustrates an improved electromagnetic radiation projection having a circular shifting diameter of 1/2 pixel; the improved electromagnetic radiation projection results in an extended area, as compared with FIG. 9A.
FIG. 9C illustrates an improved electromagnetic radiation projection having a circular shifting diameter of 1 pixel; the improved electromagnetic radiation projection results in an extended area of the projection, as compared with FIG. 9A.
FIG. 10A illustrates a DLP system with lens positioned above a projector and under a vat according to an exemplary embodiment of the present disclosure.
FIG. 10B illustrates the formation of an extended area of an electromagnetic radiation projection according to FIG. 10A.
FIG. 10C illustrates a DLP system with a lens positioned under a projector and above a vat according to an exemplary embodiment of the present disclosure.
FIG. 11A illustrates the DLP system with a mirror positioned in parallel with a projector and under a vat according to an exemplary embodiment of the present disclosure.
FIG. 11B illustrates the formation of an extended area of the electromagnetic radiation projection according to FIG. 11A.
FIG. 11C illustrates the DLP system with the mirror positioned in parallel with a projector and above a vat according to an exemplary embodiment of the present disclosure.
FIG. 12 depicts the steps of a DLP 3D printing method according to an exemplary embodiment of the present disclosure.

### DETAILED DESCRIPTION

The following description provides exemplary embodiments with specific details to one skilled in the art for a better understanding of the present disclosure. However, it should be understood that the present disclosure could be practiced even without these details. In some exemplary embodiments, to avoid unnecessarily obscuring the descriptions of exemplary embodiments, well-known structures and functions are not illustrated or not described in detail. In the specification and claims of the present disclosure, terms such as "including" and "comprising" should be comprehended as an inclusive meaning instead of an exclusive or exhaustive meaning, i.e., it means "including but not limited to" unless specifically described otherwise in the context. In this detailed description section, singular or plural terms include both the plural and singular meanings as well.

A digital light processing (DLP) three-dimensional (3D) printing system, comprising: a solidifiable material, a container for containing the solidifiable material, a platform contacting a portion of the solidifiable material, and a projector projecting an electromagnetic radiation on the portion of the solidifiable material to form a solidified layer, and characterized in that: at least one of the platform and the projector are movable along a predetermined path to continuously shift a projection of the electromagnetic radiation during formation of the solidified layer, thereby forming a smooth edge of the solidified layer.

In an exemplary embodiment, the platform is above the projector, and the platform moves upward after the solidified layer is formed in the container.

In an exemplary embodiment, the platform is under the projector, and the platform moves downward after the solidified layer is formed in the container.

In an exemplary embodiment, the predetermined path is circular shifting route, and the circular shifting route is having a shifting diameter.

In an exemplary embodiment, the shifting diameter of the circular shifting route is less than or equal to 10 pixels.

A digital light processing (DLP) three-dimensional (3D) printing system, comprising: a solidifiable material, a container containing a solidifiable material, a platform contacting a portion of the solidifable material, and a projector for projecting an electromagnetic radiation on the portion of the solidifiable material to form a solidified layer, and characterized in that: an optical component is disposed on an optical path between the projector and the platform and is rotated to continuously shift a projection of the electromagnetic radiation during formation of the solidified layer, thereby forming a smooth edge of the solidified layer.

In an exemplary embodiment, the optical component is above the projector if the projector is under the container.

In an exemplary embodiment, the optical component is under the projector if the projector is above the container.

In an exemplary embodiment, the optical component is on a same plane with the projector.

In an exemplary embodiment, the optical component is a lens, a mirror or a combination thereof.

In an exemplary embodiment, the lens is a converging lens, a plane lens, a diverging lens or a combination thereof.

In an exemplary embodiment, the lens is tilted for a tilt angle with respect to a rotation axis to refract the electromagnetic radiation from the projector, the lens is rotated about the rotation axis during the formation of the solidified layer, and the tilt angle of the lens is defined between a normal line of the refraction of the electromagnetic radiation and the rotation axis.

In an exemplary embodiment, the rotation of the lens is activated by a motor coupled to the lens.

In an exemplary embodiment, the mirror is tilted for a tilt angle with respect to a rotation axis to reflect the electromagnetic radiation from the projector, the mirror is rotated about a rotation axis during the formation of the solidified layer, and the tilt angle of the mirror is defined between a normal line of a reflection surface of the mirror and the rotation axis.

In an exemplary embodiment, the rotation of the mirror is activated by a motor coupled to the mirror.

In an exemplary embodiment, the combination of the lens and the mirror comprises at least one mirror and at least one lens; the mirror reflects the electromagnetic radiation and the electromagnetic radiation reflected by the mirror is then refracted by the lens; the mirror or the lens is rotated about a rotation axis, and the mirror is tilted for a tilt angle with respect to the rotation axis.

In an exemplary embodiment, the combination of the lens and the mirror comprises at least one mirror and at least one lens; the lens refracts the electromagnetic radiation, and the electromagnetic radiation refracted by the lens is then reflected by the mirror; the mirror or the lens is rotated about a rotation axis, and the lens is tilted for a tilt angle with respect to the rotaton axis.

A digital light processing (DLP) three-dimensional (3D) printing method is also provided, the method comprising steps of: providing a solidifiable material to a container, wherein a portion of the solidifiable material is in contact with a platform; and projecting an electromagnetic radiation by the projector on the portion of the solidifiable material while moving the platform or the projector along a predetermined path to continuously shift a projection of the electromagnetic radiation to solidify the solidifiable material, thereby forming a solidified layer having smooth edges.

In an exemplary embodiment, the predetermined path is on the X-Y plane.

In an exemplary embodiment, the predetermined path is a circular shifting route, and the predetermined path is having a shifting diameter.

In an exemplary embodiment, a shifting diameter of the circular shifting route is less than or equal to 10 pixels.

Another digital light processing (DLP) three-dimensional (3D) printing method is also provided, the method comprising steps of: providing a solidifiable material to a container, wherein a portion of the solidifiable material is in contact with a platform; and projecting an electromagnetic radiation by the projector on the portion of the solidifiable material while rotating an optical component disposed on an optical path between the platform and the projector to continuously shift a projection of the electromagnetic radiation to solidify the solidifiable material, thereby forming a solidified layer having smooth edges.

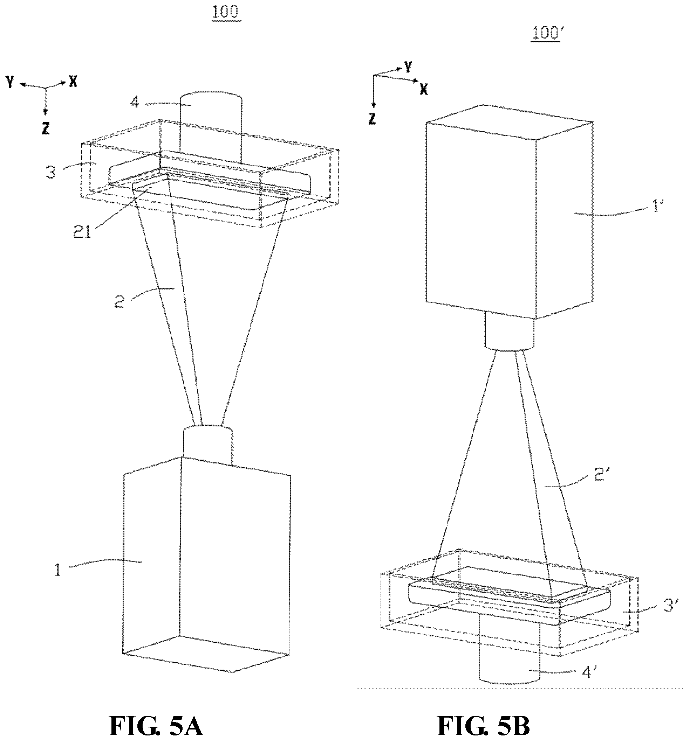

The term "X axis" refers to a direction runs horizontally in FIG. 1 to FIG. 4, and FIG. 6 to FIG. 11C in exemplary embodiments of the present disclosure. The term "Y axis" refers to a direction runs vertically in FIG. 1, FIG. 2, FIG. 6, FIG. 7, FIG. 8, and FIG. 9A to FIG. 9C in exemplary embodiments of the present disclosure. "Y axis" also refers to a direction runs into or out of the page plane in FIG. 3, FIG. 4, FIG. 10A to FIG. 10C, and FIG. 11A to FIG. 11C in exemplary embodiments of the present disclosure. The term "Z axis" refers to a direction runs vertically in FIG. 3, FIG. 4, FIG. 10A to FIG. 10C, and FIG. 11A to FIG. 11C in exemplary embodiments of the present disclosure. The "X-Y plane" refers to a plane formed by X axis and Y axis, wherein FIG. 1, FIG. 2, FIG. 6 to FIG. 8, and FIG. 9A to FIG. 9C are illustrations of exemplary embodiments on the X-Y plane, in accordance with the present disclosure. The "X-Z plane" refers to a plane formed by X axis and Z axis, wherein FIG. 3, FIG. 4, FIG. 10A to FIG. 10C, and FIG. 11A to FIG. 11C are illustrations of exemplary embodiments on the X-Z plane, in accordance with the present disclosure. The X axis, the Y axis and the Z axis in FIG. 5A and FIG. 5B are defined in the figures, respectively.

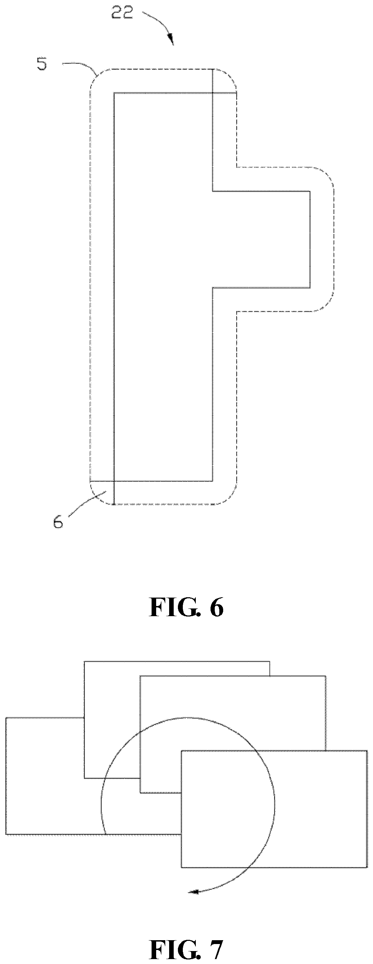

Referring to FIG. 5A, 5B and FIG. 6, a DLP 3D printing system 100, a DLP 3D printing system 100' and a DLP 3D printing method in accordance with exemplary embodiments of the present disclosure are provided. As shown in FIG. 5A, the system 100 includes a projector 1 which generates an electromagnetic radiation 2. That is, the projector 1 is a source of the electromagnetic radiation 2. The system 100 may also include a container 3 to contain a solidifiable material, and the solidifiable material forms a solidified layer when exposed to the electromagnetic radiation 2 generated by the projector 1. The electromagnetic radiation 2 forms an electromagnetic radiation projection 21 on the surface of the solidifiable material. The container 3, for example, is a vat 3. The system 100 may further include a platform 4. At least one part of the platform 4 is inside the vat 3 and in contact with a portion of the solidifiable material. The portion of the solidifiable material becomes a solidified layer after being applied to the electromagnetic radiation 2. The platform 4 moves upward after a solidified layer is formed, and the newly formed solidified layer is carried by the platform 4. After the movement of the platform 4, another portion of the solidifiable material under the newly formed solidified layer will be ready to receive the electromagnetic radiation 2. Referring to FIG. 5A, the projector 1 is configured to be under the vat 3, the platform 4 would be above the vat 3, and the platform 4 moves upward after the solidified layer is formed.

Referring to FIG. 5B, a DLP 3D printing system 100' in accordance with exemplary embodiments of the present disclosure is provided. The projector 1' is configured to be above the vat 3'. At least one part of the platform 4' is inside the vat 3' and in contact with a portion of the solidifiable material. The portion of the solidifiable material becomes a solidified layer after being applied to the electromagnetic radiation 2'. The platform 4' moves downward after the solidified layer is formed, and the newly formed solidified layer is carried by the platform 4'. After the movement of the platform 4', another portion of the solidifiable material above the newly formed solidified layer will be ready to receive the electromagnetic radiation 2'.

The projector 1 or platform 4 may be movable along a predetermined path to shift a projection of the electromagnetic radiation 2 continuously during the formation of the solidified layer, thus forming an electromagnetic radiation projection 22 with smooth edges 6 or extended areas 5, as shown in FIG. 6. The predetermined path may be on the X-Y plane. In an exemplary embodiment, an actuator (not shown) may be coupled to the projector 1 or the platform 4 to facilitate the movement of the projector 1 or the platform 4. The actuator can be a motor mechanism, and the motor mechanism is predetermined in the DLP 3D printing system. The solidifiable material will form a solidified layer by the shape of electromagnetic radiation projection 22 in FIG. 6.

When the projector 1' is configured to be above the vat 3', the platform 4' moves downward after the solidified layer is formed in the vat 3'. When the projector 1 is configured to be under the vat 3, the platform 4 would be above the vat 3, and the platform 4 moves upward after the solidified layer is formed in the vat 3. The platform 4, 4' may be shifted in a plane relative to the projector 1, 1' to form electromagnetic radiation projections 22 of smooth edges and extended area. The platform 4, 4' may be shifted in the X-Y plane.

The DLP 3D printing system 100 may generate multiple electromagnetic radiation projections of smooth edges and extended areas. A solidification process is the formation of a solidified layer when being applied to an electromagnetic radiation projection 21. In an exemplary embodiment of the present disclosure, the solidifiable material can be a photopolymer resin. A solidified layer is formed when being applied to the electromagnetic radiation projection 21. The shape of the solidified layer corresponds to the shape of the electromagnetic radiation projection 21.

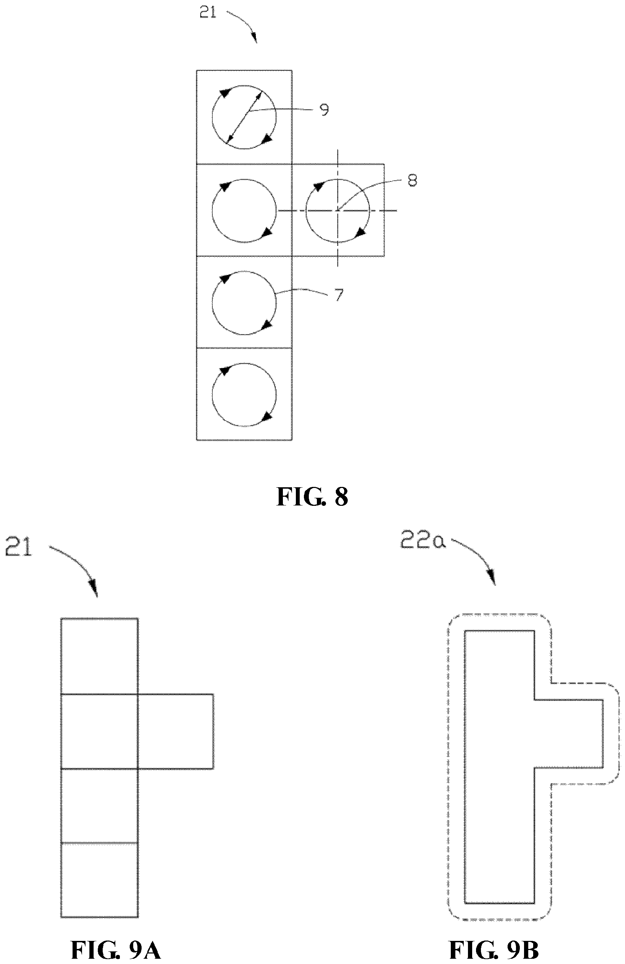

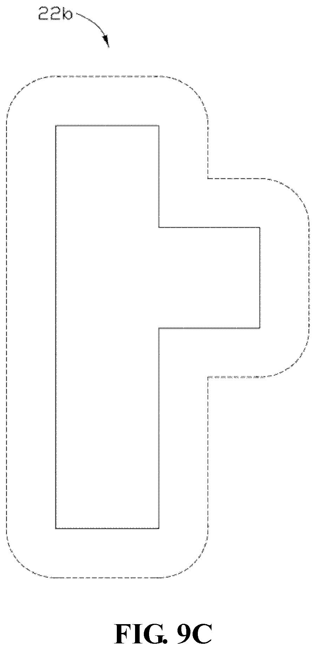

The projector 1 includes a DMD. The DMD is the source of electromagnetic radiation 2 and generates at least one wavelength of electromagnetic radiation 2. The wavelength of the electromagnetic radiation 2 is dependent on the solidifiable material used in the DLP 3D printing system 100. The electromagnetic radiation 2 has a range of wavelength of about 350 nm to 550 nm. Preferably, the wavelength of the electromagnetic radiation 2 is about 405 nm. The electromagnetic radiation 2 can be UV. One or more original images are inputted into the projector 1 to be processed into an electromagnetic radiation projection. At least one of the platform 4 and the projector 1 is movable along a predetermined path, and the electromagnetic radiation is projected to the solidifiable material, thus forming smooth edges 6 of the solidified layer and extended areas 5 of the solidified layer. As illustrated in FIG. 7, the projector 1 may be shifted continuously relative to the vat to form electromagnetic radiation projections 21 of smooth edges and extended area. As illustrated in FIG. 8, the shifting route 7, i.e., the predetermined path, may be a circular shifting route. The circular shifting route 7 moves around a center 8, and the circular shifting route 7 has a diameter 9 relative to the center 8. The circular shifting route 7 may be on the X-Y plane. As illustrated in FIG. 9A, there are 5 pixels in the original electromagnetic radiation projection 21. However, as illustrated in FIG. 9B, the area of the electromagnetic radiation projection 22a is extended comparing to the original image. The circular shifting diameter is positively correlated to the extended area of the electromagnetic radiation projection 22a; and the larger the circular shifting diameter, the larger the extended area. The circular shifting diameter is less than 10 pixels. The circular shifting diameter may include, but not be limited to 1/2 pixel as shown as FIG. 9B, or 1 pixel as shown as FIG. 9C. The circular shifting diameter can be an integer multiple of one pixel, such as 1, 2, 3, 4, 5, 6, 7 or 8 pixels. The circular shifting diameter can also be a non-integer multiple of one pixel, such as 0.5, 1.11, 2.11 or 3.33 pixels.

The vat 3 is comprised of one or more transparent materials. The electromagnetic radiation 2 from the projector 1 is able to pass through the transparent material of the vat 3 and reach the solidifiable material contained in the vat.

The movements of the platform 4, 4' or the projector 1, 1' shift the projection of the electromagnetic radiation continuously in the DLP 3D printing system. The platform 4, 4' or the projector 1, 1' moves continuously during the formation of the solidified layer, thereby no intermittent pauses and re-adjustments are required in the process.

In an exemplary embodiment, the system may include an optical component disposed on an optical path between the source of electromagnetic radiation 2 and the platform 4. The optical component can be a lens 10a, a mirror 10b or a lens/mirror combination. The optical component may be tilted and rotated to direct the electromagnetic radiation 2 to form a rounded contour on the edge of the projection.

The optical component is positioned on an optical path between the source of the electromagnetic radiation 2 and the vat 3. The arrangement of the optical component in the DLP 3D printing system is dependent on the position of the projector 1 and the vat 3. The optical component can be above the projector 1 if the projector 1 is under the vat 3. The optical component can also be under the projector 1 if the projector 1 is above the vat 3. The optical component can also be located on the same plane with the projector 1. The optical component may change the route of the electromagnetic radiation 2 from the projector 1, and may change the shape of the electromagnetic radiation projection 21 on the solidifiable material. The optical component can be any one of a lens, a mirror or a lens/mirror combination.

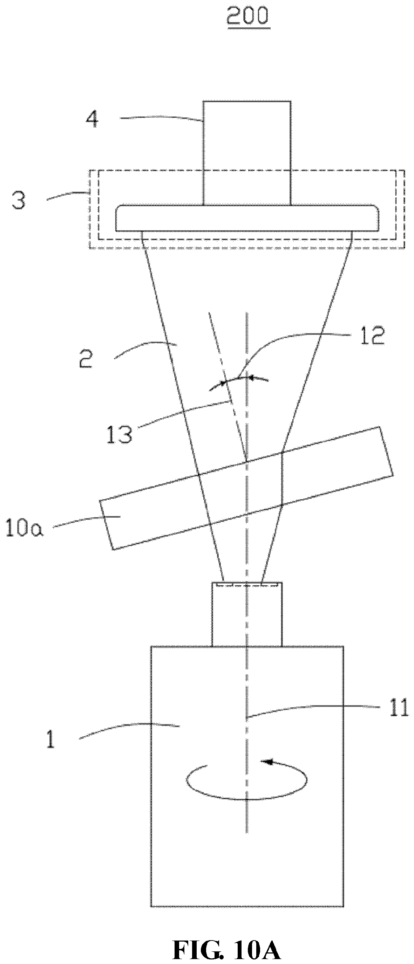

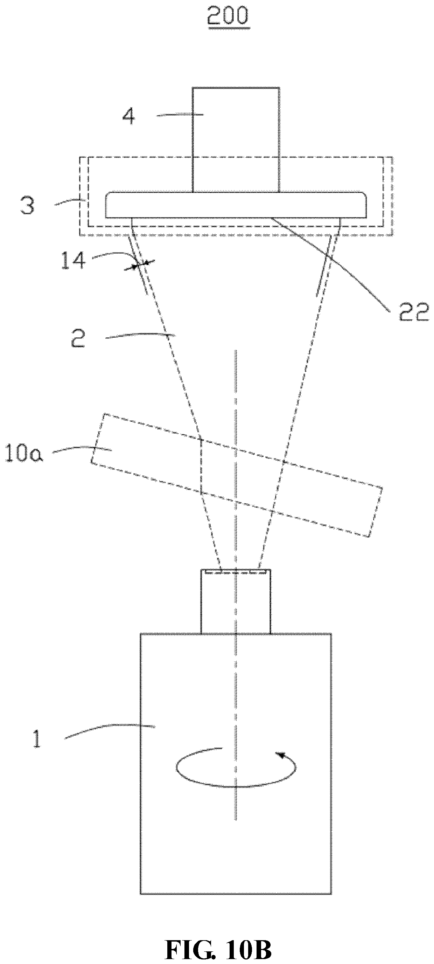

A DLP 3D printing system 200 in accordance with exemplary embodiments of the present disclosure is provided. The optical component is the lens 10a as shown in FIG. 10A. The lens 10a can be a converging lens, a plane lens, a diverging lens or a combination thereof. Referring to FIG. 10A, the projector 1 is under the vat 3, and the lens 10a is positioned above the projector 1 and located between the projector 1 and the vat 3. Referring to FIG. 10A, the lens 10a is rotated about a rotation axis 11, and the lens 10a is tilted to refract the electromagnetic radiation 2 from the projector 1. The electromagnetic radiation 2 is refracted by the lens 10a, and the tilt angle 12 of the lens 10a is the angle between the normal line 13 of the surface of the lens 10a and the rotation axis 11. The normal line 13 of the surface of the lens 10a can also be a normal line of the refraction. The tilted rotating lens 10a may enlarge the electromagnetic radiation projection 22 continuously as shown as FIG. 10B. The tilt angle 12 of the lens 10a is positively correlated to the extended area 14 of the electromagnetic radiation. The tilt angle 12 may be predetermined or programmed in the DLP 3D printing system 200 of the present disclosure, in accordance with the size of the extended area. The tilt angle 12 can be affected by material and optical properties of the lens 10a. When setting the tilt angle 12, the refractive index (RI), the thickness or the focus of the lens 10a may be determinants of the tilt angle 12. The tilt angle 12 can be 1° to 45°. Preferably, the tile angle 12 can be 5°.

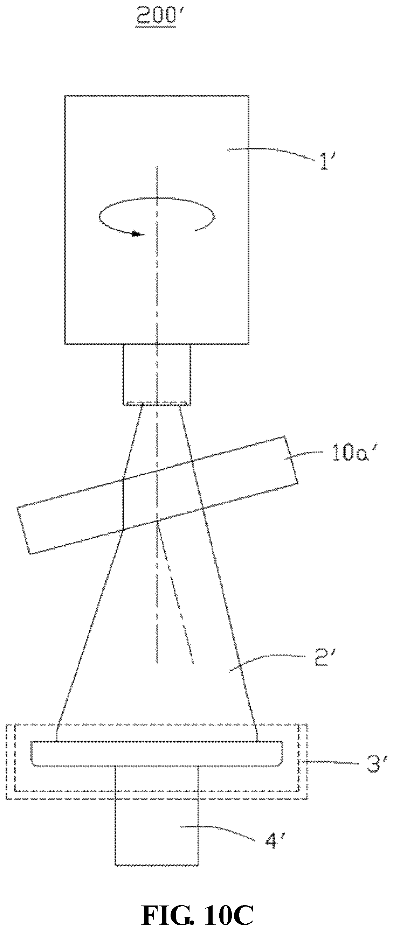

Referring to FIG. 10C, a DLP 3D printing system 200' in accordance with exemplary embodiments of the present disclosure is provided. The projector 1' is above the vat 3', the lens 10a' is positioned under the projector 1' and located between the projector 1' and the vat 3' in the DLP 3D printing system 200' in an exemplary embodiment. The lens 10a' is tilted to refract the electromagnetic radiation 2' from the projector 1'.

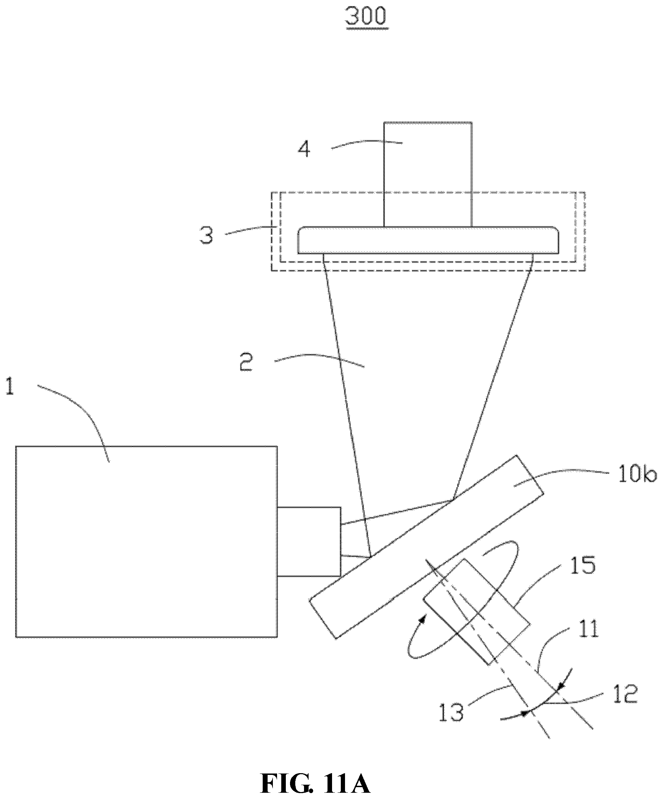

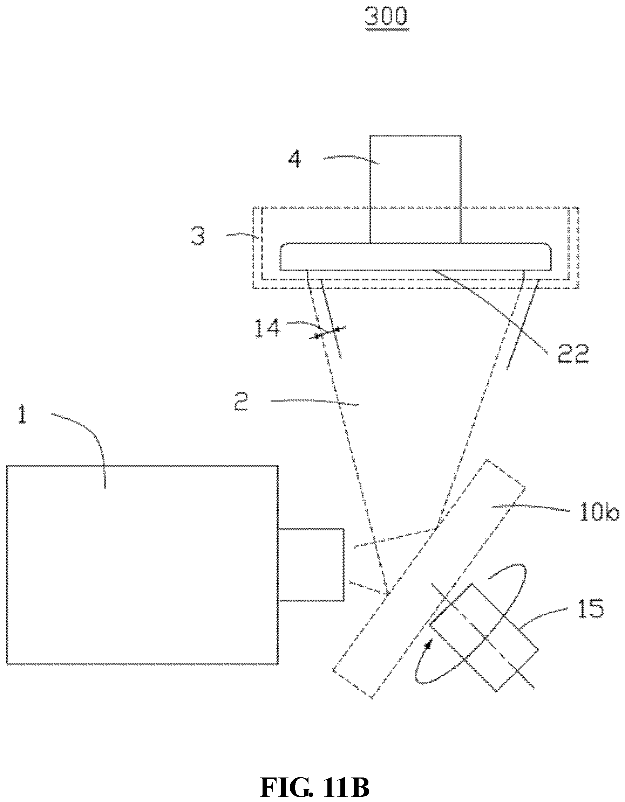

A DLP 3D printing system 300 in accordance with exemplary embodiments of the present disclosure is provided. The optical component 10 is the mirror 10b as shown as FIG. 11A. The projector 1 is under the vat 3, the mirror 10b can be positioned in parallel with the projector 1 and under the vat 3. The mirror 10b may reflect the electromagnetic radiation 2 generated by the DMD in the projector 1. The mirror 10b is rotated about a rotation axis 11. The rotation is activated by a motor 15 coupled to the mirror 10b. The mirror 10b is tilted, and the tilt angle 12 of the mirror 10b is the angle between the rotation axis and a normal line 13 of the surface of the mirror 10b. The normal line 13 of the surface of the mirror 10b can also be a normal line of a reflection surface of the mirror 10b. When comparing with the original image, the electromagnetic radiation projection 22 is enlarged continuously because of the tilted rotational mirror as shown as FIG. 11B. The tilt angle 12 of the mirror 10b is positively correlated to the extended area 14 of the projection. The tilt angle 12 may be predetermined or programmed in the DLP 3D printing system 300 of the present disclosure, in accordance with the size of the extended area 14. The tilt angle 12 can be affected by various determinant in the DLP 3D printing system 300 illustrated in FIG. 11A and FIG. 11B. The distance between a center of the mirror 10b and the image focal plane, the image rotation shift radius and the focus of the mirror 10b can be determinants when setting the tilt angle 12. Preferably, the tilt angle 12 is less than 1°.

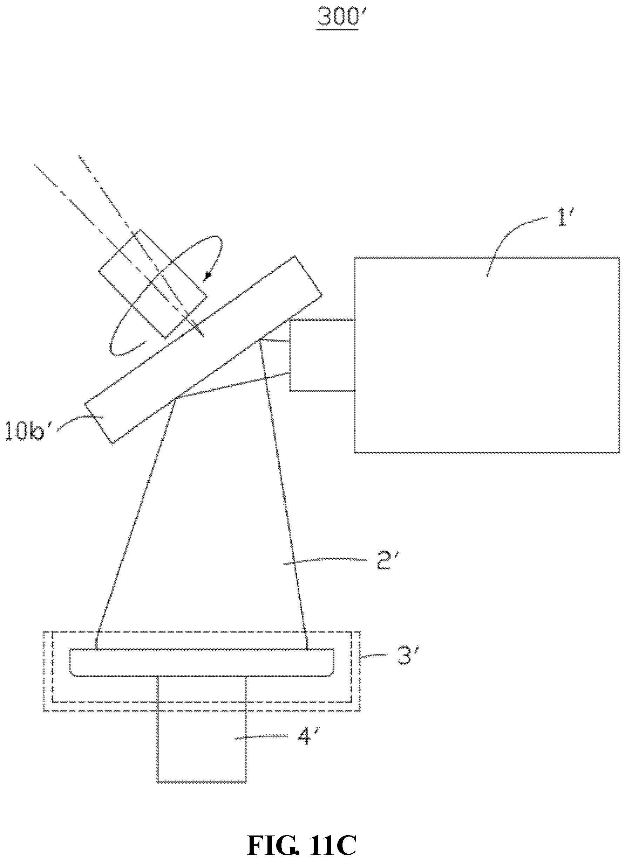

A DLP 3D printing system 300' in accordance with exemplary embodiments of the present disclosure is provided. Referring to FIG. 11C, the projector 1' is above the vat 3', the mirror 10b' can be positioned in parallel with the projector 1' and above the vat 3' in the DLP 3D printing system 300' in an exemplary embodiment. The mirror 10b' may reflect the electromagnetic radiation 2' generated by the DMD in the projector 1'.

In an exemplary embodiment, the optical component is a mirror/lens combination. The mirror/lens combination includes at least one mirror and at least one lens. The mirror/lens combination is positioned between the projector and the vat. The mirror reflects the electromagnetic radiation generated by the DMD in the projector, and the electromagnetic radiation reflected by the mirror is refracted by the lens. The lens can also be positioned to refract the electromagnetic radiation generated by the DMD in the projector, and the electromagnetic radiation refracted by the lens is then reflected by the mirror. The mirror or the lens can be rotated, and the mirror or the lens can be tilted for a tilt angle with respect to the rotation axis. Extended areas may be present in the electromagnetic radiation projection, and the extended areas of the electromagnetic radiation projection are positively correlated to the tilt angle of the mirror or the lens.

The tilt and rotation of the lens, the mirror, or the mirror/lens combination modify the projection of the electromagnetic radiation continuously in the DLP 3D printing system. The lens, the mirror, or the mirror/lens combination rotates continuously during the formation of the solidified layer, thereby no intermittent pauses and re-adjustments are required in the process. With the tilting and rotation of the optical components, or the movements of the platform or the projector, production speed and efficiency of DLP products increase significantly as compared to the existing art. Moreover, because no additional images are needed to form different electromagnetic projections, the cost for eliminating roughness of DLP products reduces. The present disclosure provides a time- and cost-effective method for manufacturing DLP products with smooth edges.

In an exemplary embodiment, the DLP system may include at least one lens, a projector, a platform and a vat. One or more lenses are located between the projector and the platform. The lens can be a converging lens, a plane lens, a diverging lens or a combination thereof. If the projector is under the vat, the lens is positioned above the projector and between the projector and the vat. If the projector is above the vat, the lens is positioned under the projector and between the projector and the vat. The electromagnetic radiation generated by the DMD in the projector is refracted by the lens. The refracted electromagnetic radiation forms at least one electromagnetic radiation projection on the solidifiable material in the vat. The lens is rotated about a rotation axis, and the lens is tilted. The rotation of the lens is activated by a motor coupled to the lens. The tilt angle of the lens is the angle between the normal line of the refraction and the rotation axis. The tilted rotating lens may enlarge the electromagnetic radiation projection. The tilt angle of the lens is positively correlated to the extended area of the projection.

In an exemplary embodiment, the DLP system may include at least one mirror, a projector, a platform and a vat. One or more mirrors are located in parallel with the electromagnetic radiation source. The mirror reflects the electromagnetic radiation generated by the DMD in the projector. The mirror is rotated about a rotation axis. The rotation is activated by a motor coupled to the mirror. The mirror is tilted, and the tilt angle of the mirror is the angle between the rotation axis and a normal line of the surface of the mirror. The tilted mirror may enlarge the electromagnetic radiation projection. The tilt angle of the mirror is positively correlated to the extended area of the projection.

In an exemplary embodiment, the DLP system may include at least one mirror, at least one lens, a projector, a platform and a vat. The electromagnetic radiation generated by the DMD in the projector can be reflected by the mirror and then refracted by the lens to reach the vat. The electromagnetic radiation generated by the DMD in the projector can also be refracted by the lens and then reflected by the mirror to reach the vat. The lens or the mirror can be rotated or tilted to form an electromagnetic radiation projection of smooth edges and extended areas relative to the original image. The rotation mechanism is activated by a motor coupled to the lens or the mirror.

In an exemplary embodiment, the DLP system may include a movable projector, a platform and a vat. The projector is movable relative to the platform. The projector is shifted during one solidification process to form electromagnetic radiation projections of smooth edges and extended area. The projector can be shifted in a circular manner. The circular shifting moves around a center, and the circular shifting has a diameter relative to the center. At least one circular shifting may be completed in a single solidification process. To ensure the size and detail appearances of the DLP product are not altered dramatically, the circular shifting diameter is less than or equal to 10 pixels.

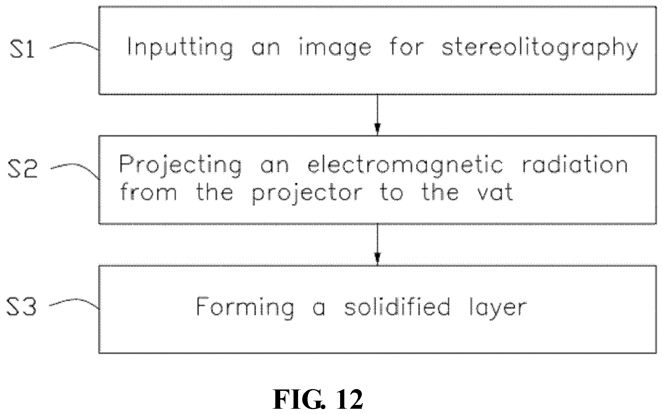

In an exemplary embodiment, the present disclosure is further directed to an improved stereolithography process, in particular, a DLP 3D printing method. Referring to FIG. 12, the method includes:
S1: inputting an image for stereolitography: the user may input a 3D design of an object to the DLP 3D printing system. The 3D design can be sliced into multiple layers of images manually or automatically. The layers of images may be modified. The projector receives original or modified image of each layer to form one or more electromagnetic radiation projections.
S2: projecting an electromagnetic radiation from the projector to the vat: the electromagnetic radiation is shifted, refracted or reflected to form a rounded contour or extended areas relative to the original image on the solidifiable material in the vat. The shifting, refraction or reflection of the electromagnetic radiation may be contributed to the movement, tilt, and rotation of any one or more of the following components in the DLP system, and the movement, tilt, and rotation of the components are programmed so that the electromagnetic radiation projections are modifications of the original image.

The tilt angle of the lens, the mirror or the lens/mirror combination corresponds to the extended area of the electromagnetic radiation projection. The electromagnetic radiation projection is modified continuously by the lens, the mirror, or the lens/mirror combination during the formation of the solidified layer.

The shifting of the projector: the projector can be continuously shifted relative to the platform to form the shape of the electromagnetic radiation projection. The shifting route of the projector can be a circular route. The circular shifting route may surround a center. The circular shifting route may have a diameter. Larger circular shifting diameter represents larger extended areas.

The shifting of the platform: the platform can be continuously shifted relative to the projector to form the shape of the electromagnetic radiation projection.

S3, forming a solidified layer: the solidified layer is formed from the solidifiable material in the vat. The solidified layer has a shape corresponds to the electromagnetic radiation projection. When comparing with the original image, the shape of the solidified layer has a smooth edge and extended areas.

The DLP products manufactured in accordance with the various exemplary embodiments of the present disclosure have smooth edges. No polishing is required after the product leaves the DLP system, therefore greatly reducing the time and cost for manufacturing DLP products.

It is to be further understood that even though numerous characteristics and advantages of the present exemplary embodiments have been set forth in the foregoing description, together with details of the structures and functions of the exemplary embodiments, the disclosure is illustrative only, and changes may be made in details, especially in matters of shape, size, and arrangement of parts within the principles of the disclosure to the full extent indicated by the broad general meaning of the terms in which the appended claims are expressed.

## Claims

1. A digital light processing (DLP) three-dimensional (3D) printing system, comprising a solidifiable material, a container for containing the solidifiable material, a platform contacting a portion of the solidifiable material, and a projector for projecting an electromagnetic radiation on the portion of the solidifiable material to form a solidified layer, and **characterized in that**:
at least one of the platform and the projector are movable along a predetermined path to continuously shift a projection of the electromagnetic radiation during formation of the solidified layer, thereby forming a smooth edge of the solidified layer.

2. The DLP 3D printing system of claim 1, wherein the platform is disposed above the projector, and the platform moves upward after the solidified layer is formed in the container.

3. The DLP 3D printing system of claim 1, wherein the platform is disposed under the projector, and the platform moves downward after the solidified layer is formed in the container.

4. The DLP 3D printing system of claim 1, wherein the predetermined path is a circular shifting route.

5. A digital light processing (DLP) three-dimensional (3D) printing system, comprising a solidifiable material, a container for containing the solidifiable material, a platform contacting a portion of the solidifiable material, and a projector for projecting an electromagnetic radiation on the portion of the solidifiable material to form a solidified layer, and **characterized in that**:
an optical component is disposed on an optical path between the projector and the platform and is rotated to continuously shift a projection of the electromagnetic radiation during formation of the solidified layer, thereby forming a smooth edge of the solidified layer.

6. The DLP 3D printing system of claim 5, wherein the optical component is a lens, a mirror, or a combination thereof.

7. The DLP 3D printing system of claim 6, wherein the lens is a converging lens, a plane lens, a diverging lens, or a combination thereof.

8. The DLP 3D printing system of claim 6, wherein the lens is tilted for a tilt angle with respect to a rotation axis to refract the electromagnetic radiation from the projector, the lens is rotated about the rotation axis during the formation of the solidified layer, and the tilt angle of the lens is defined between a normal line of the refraction of the electromagnetic radiation and the rotation axis.

9. The DLP 3D printing system of claim 6, wherein the mirror is tilted for a tilt angle with respect to a rotation axis to reflect the electromagnetic radiation from the projector, the mirror is rotated about a rotation axis during the formation of the solidified layer, and the tilt angle of the mirror is defined between a normal line of a reflection surface of the mirror and the rotation axis.

10. A digital light processing (DLP) three-dimensional (3D) printing method comprising steps of:
providing a solidifiable material to a container, wherein a portion of the solidifiable material is in contact with a platform; and
projecting an electromagnetic radiation by the projector on the portion of the solidifiable material while moving the platform or the projector along a predetermined path to continuously shift a projection of the electromagnetic radiation to solidify the solidifiable material, thereby forming a solidified layer having smooth edges.

11. The DLP 3D printing method of claim 10, wherein the predetermined path is a circular shifting route.

12. A digital light processing (DLP) three-dimensional (3D) printing method, comprising steps of:
providing a solidifiable material to a container, wherein a portion of the solidifiable material is in contact with a platform; and
projecting an electromagnetic radiation by the projector on the portion of the solidifiable material while rotating an optical component disposed on an optical path between the platform and the projector to continuously shift a projection of the electromagnetic radiation to solidify the solidifiable material, thereby forming a solidified layer having smooth edges.

13. The DLP 3D printing method of claim 12, wherein the optical component is a lens, the lens is tilted for a tilt angle with respect to a rotation axis to refract the electromagnetic radiation from the projector, and the lens is rotated about the rotation axis during formation of the solidified layer.

14. The DLP 3D printing method of claim 12, wherein the optical component is a mirror, the mirror is tilted for a tilted angle with respect to a rotation axis to reflect the electromagnetic radiation from the projector, and the mirror is rotated about the rotation axis during formation of the solidified layer.
